# EUROPEAN PATENT APPLICATION

(11) **EP 3 733 526 A1**
(43) Date of publication of application: **04.11.2020**
(21) Application number: 19216308.7
(22) Date of filing: 13.12.2019
(51) Int. Cl.: B64D 47/04

(54) **DYNAMIC BEAM AIRCRAFT LIGHT ASSEMBLY AND SYSTEM**

(30) Priority: 02.05.2019 US 201916401888
(71) Applicant: B/E Aerospace, Inc., Winston- Salem, NC 27105 (US)
(72) Inventor: EDQUIST, John D., Milwaukee, WI 53207 (US)
(74) Representative: Dehns

(57) **Abstract**

An aircraft light assembly is disclosed. In one or more embodiments, the aircraft light assembly includes a tunable liquid crystal lens with an electrically controlled liquid crystal layer. The aircraft light assembly further includes a light source configured to direct light through the tunable liquid crystal lens and a controller coupled to the tunable liquid crystal lens. The controller is configured to generate an electrical signal that produces a uniform or non-uniform adjustment of the tunable liquid crystal lens, resulting in at least one of a dispersing, shaping, or steering of the light as the light passes through the tunable liquid crystal layer of the tunable liquid crystal lens. In embodiments, the controller is configured to generate the electrical signal based upon an input from an aircraft control system and/or an aircraft user interface.

## Description

### BACKGROUND

Nearly all aircraft, particularly large passenger and freight aircraft, are equipped with a variety of external lights, such as beacon lights, navigation lights, anti-collision lights, taxi lights, and landing lights, among others. Landing lights are used during take-off and landing, illuminating the runway and nearby terrain that lay ahead of the aircraft. Taxi lights are used primarily while the aircraft is taxiing between the runway and the passenger boarding and/or freight loading area.

Landing and taxi lights often have a similar distribution and number on aircraft. A set of landing lights and taxi lights are typically placed on each of the two wings of the aircraft. Another set of landing and taxi lights are typically placed on the nose or forward landing gear of the aircraft. Landing lights and taxi lights share similar luminosities and are generally pointed in the same direction. However, the beam width of the landing lights and taxi lights differ. Landing lights have a narrow, focused beam, whereas taxi lights have a wide, diffuse beam. Landing lights also tend to be angled more towards the ground than taxi lights. Because landing lights and taxi lights share similar luminosity and direction characteristics, consolidation of the two lights into one light that can adjust beam width and direction would save costs in both the building and maintenance of the aircraft, as well as in the reduced fuel consumed due to reduced weight during flight. Traditional methods for adjusting the beam width and beam direction of a light source often rely on motorized movement of focusing and directional components. These complex mechanisms and components are not well suited for the extreme conditions of air flight (e.g., temperature extremes, vibration), making it unlikely that such components would pass quality standards for use on an aircraft. Consequently, there is a need for an aircraft-suitable method for adjusting an external light source on an aircraft between landing and taxi modes.

### SUMMARY

An aircraft light assembly is disclosed. In one or more embodiments, the aircraft light assembly includes a tunable liquid crystal lens with an electrically controlled liquid crystal layer. The aircraft light assembly further includes a light source configured to direct light through the tunable liquid crystal lens and a controller coupled to the tunable liquid crystal lens. The controller is configured to generate an electrical signal that produces a uniform or non-uniform adjustment of the tunable liquid crystal lens, resulting in at least one of a dispersing, shaping, or steering of the light as the light passes through the tunable liquid crystal layer of the tunable liquid crystal lens. In embodiments, the controller is configured to generate the electrical signal based upon an input from an aircraft control system and/or an aircraft user interface.

In some embodiments of the aircraft light assembly, the input to the controller is based on at least one flight parameter detected or determined by the aircraft control system. Examples of flight parameters may include, but are not limited to, velocity, acceleration, altitude, angle of attack, or turning direction detected or determined by the aircraft control system.

In some embodiments of the aircraft light assembly, the controller is configured to generate the electrical signal to produce an adjustment of the tunable liquid crystal layer of the tunable liquid crystal lens to increase dispersion of the light as the light passes through the tunable liquid crystal layer when the at least one flight parameter detected or determined by the aircraft control system is less than at least one a predetermined threshold value for the at least one flight parameter.

In some embodiments of the aircraft light assembly, the controller is configured to generate the electrical signal to produce an adjustment of the tunable liquid crystal layer of the tunable liquid crystal lens to reduce dispersion of the light as the light passes through the tunable liquid crystal layer when the at least one flight parameter detected or determined by the aircraft control system is greater than at least one a predetermined threshold value for the at least one flight parameter.

In some embodiments of the aircraft light assembly, the controller is configured to generate the electrical signal to produce an adjustment of the tunable liquid crystal layer of the tunable liquid crystal lens to steer the light as the light passes through the tunable liquid crystal layer based on the at least one flight parameter detected or determined by the aircraft control system.

In some embodiments of the aircraft light assembly, the input to the controller is based on a flight mode provided by the aircraft control system or via the aircraft user interface.

In some embodiments of the aircraft light assembly, the controller is configured to generate the electrical signal to produce an adjustment of the tunable liquid crystal layer of the tunable liquid crystal lens to increase dispersion of the light as the light passes through the tunable liquid crystal layer when the flight mode provided by the aircraft control system or the aircraft user interface corresponds to a low altitude and low velocity mode of operation.

In some embodiments of the aircraft light assembly, the controller is configured to generate the electrical signal to produce an adjustment of the tunable liquid crystal layer of the tunable liquid crystal lens to reduce dispersion of the light as the light passes through the tunable liquid crystal layer when the flight mode provided by the aircraft control system or the aircraft user interface corresponds to at least one of a high altitude or a high velocity mode of operation.

In some embodiments of the aircraft light assembly, the controller is configured to generate the electrical signal to produce an adjustment of the tunable liquid crystal layer of the tunable liquid crystal lens to steer the light as the light passes through the tunable liquid crystal layer based on the flight mode provided by the aircraft control system or the aircraft user interface.

An external lighting system for an aircraft is disclosed. In one or more embodiments, the external lighting system includes an aircraft control system, an aircraft user interface, and one or more aircraft light assemblies mounted to the aircraft. An aircraft light assembly of the external lighting system includes a tunable liquid crystal lens with an electrically controlled liquid crystal layer. The aircraft light assembly further includes a light source configured to direct light through the tunable liquid crystal lens and a controller coupled to the tunable liquid crystal lens. The controller is configured to generate an electrical signal that produces a uniform or non-uniform adjustment of the tunable liquid crystal lens, resulting in at least one of a dispersing, shaping, or steering of the light as the light passes through the tunable liquid crystal layer of the tunable liquid crystal lens. In embodiments, the controller is configured to generate the electrical signal based upon an input from an aircraft control system and/or an aircraft user interface.

In some embodiments of the external lighting system, the input to the controller is based on at least one flight parameter detected or determined by the aircraft control system. Examples of flight parameters may include, but are not limited to, velocity, acceleration, altitude, angle of attack, or turning direction detected or determined by the aircraft control system.

In some embodiments of the external lighting system, the controller is configured to generate the electrical signal to produce an adjustment of the tunable liquid crystal layer of the tunable liquid crystal lens to increase dispersion of the light as the light passes through the tunable liquid crystal layer when the at least one flight parameter detected or determined by the aircraft control system is less than at least one of a predetermined threshold value for the at least one flight parameter.

In some embodiments of the external lighting system, the controller is configured to generate the electrical signal to produce an adjustment of the tunable liquid crystal layer of the tunable liquid crystal lens to reduce dispersion of the light as the light passes through the tunable liquid crystal layer when the at least one flight parameter detected or determined by the aircraft control system is greater than at least one of a predetermined threshold value for the at least one flight parameter.

In some embodiments of the external lighting system, the controller is configured to generate the electrical signal to produce an adjustment of the tunable liquid crystal layer of the tunable liquid crystal lens to steer the light as the light passes through the tunable liquid crystal layer based on the at least one flight parameter detected or determined by the aircraft control system.

In some embodiments of the external lighting system, the input to the controller is based on a flight mode provided by the aircraft control system or via the aircraft user interface.

In some embodiments of the external lighting system, the controller is configured to generate the electrical signal to produce an adjustment of the tunable liquid crystal layer of the tunable liquid crystal lens to increase dispersion of the light as the light passes through the tunable liquid crystal layer when the flight mode provided by the aircraft control system or the aircraft user interface corresponds to a low altitude and low velocity mode of operation.

In some embodiments of the external lighting system, the controller is configured to generate the electrical signal to produce an adjustment of the tunable liquid crystal layer of the tunable liquid crystal lens to reduce dispersion of the light as the light passes through the tunable liquid crystal layer when the flight mode provided by the aircraft control system, or the aircraft user interface, corresponds to at least one of a high altitude or a high velocity mode of operation.

In some embodiments of the external lighting system, the controller is configured to generate the electrical signal to produce an adjustment of the tunable liquid crystal layer of the tunable liquid crystal lens to steer the light as the light passes through the tunable liquid crystal layer based on the flight mode provided by the aircraft control system or the aircraft user interface.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1A is an isometric view of an aircraft light assembly with a tunable liquid crystal lens, in accordance with one or more embodiments of this disclosure;
FIG. 1B is an exploded view of an aircraft light assembly with a tunable liquid crystal lens, in accordance with one or more embodiments of this disclosure;
FIG. 2A is a diagram illustrating light passing through a tunable liquid crystal lens with no application of an electrical signal on the tunable liquid crystal lens, in accordance with one or more embodiments of this disclosure;
FIG 2B is a diagram illustrating light passing through a tunable liquid crystal lens with a relatively small application of an electrical signal on the tunable liquid crystal lens, in accordance with one or more embodiments of this disclosure;
FIG 2C is a diagram illustrating light passing through a tunable liquid crystal lens with a relatively large application of an electrical signal on the tunable liquid crystal lens, in accordance with one or more embodiments of this disclosure;
FIG 3. is a block diagram depicting an external lighting system for an aircraft with a tunable liquid crystal lens, in accordance with one or more embodiments of this disclosure;
FIG. 4 is a top view of an aircraft including external light assemblies with tunable liquid crystal lenses in the wings and cockpit, in accordance with one or more embodiments of this disclosure;
FIG. 5A is an illustration of a helicopter including an aircraft light assembly with a tunable liquid crystal lens, the helicopter relatively far from the ground, in accordance with one or more embodiments of this disclosure; and
FIG 5B is an illustration of a helicopter including an aircraft light assembly with a tunable liquid crystal lens, the helicopter relatively near the ground, in accordance with one or more embodiments of this disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of sub-combination of two or more such features, along with any other features which may not necessarily be expressly described or inherently present in the instant disclosure.

Nearly all aircraft, particularly large passenger and freight aircraft, are equipped with a variety of external lights, such as beacon lights, navigation lights, anti-collision lights, taxi lights, and landing lights, among others. Landing lights are used during take-off and landing, illuminating the runway and nearby terrain that lay ahead of the aircraft. Taxi lights are used primarily while the aircraft is taxiing between the runway and the passenger boarding and/or freight loading area.

Landing and taxi lights often have a similar distribution and number on aircraft. A set of landing lights and taxi lights are typically placed on each of the two wings of the aircraft. Another set of landing and taxi lights are typically placed on the nose or forward landing gear of the aircraft. Landing lights and taxi lights share similar luminosities and are generally pointed in the same direction. However, the beam width of the landing lights and taxi lights differ. Landing lights may have a narrow, focused beam, whereas taxi lights may have a wide, diffused beam. Landing lights also tend to be angled more towards the ground than taxi lights.

Because landing lights and taxi lights share similar luminosity and direction characteristics, consolidation of the two lights into one light that can adjust beam width and direction would save costs in both the building and maintenance of the aircraft, as well as in the reduced fuel consumed due to reduced weight during flight. Traditional methods for adjusting the beam width and beam direction of a light source often rely on motorized movement of focusing and directional components. These complex mechanisms and components are not well suited for the extreme conditions of air flight (e.g., temperature extremes, vibration), making it unlikely that such components would pass quality standards for use on an aircraft. Consequently, there is a need for an aircraft-suitable method for adjusting an external light source on an aircraft between landing and taxi modes.

Broadly, embodiments of the present disclosure are directed to the use of an external aircraft light assembly, where the light can be dispersed (e.g., diffused), shaped or steered though adjustment of a tunable liquid crystal lens within the external aircraft light assembly. This may allow for improved control and/or reduced number of external light sources on an aircraft.

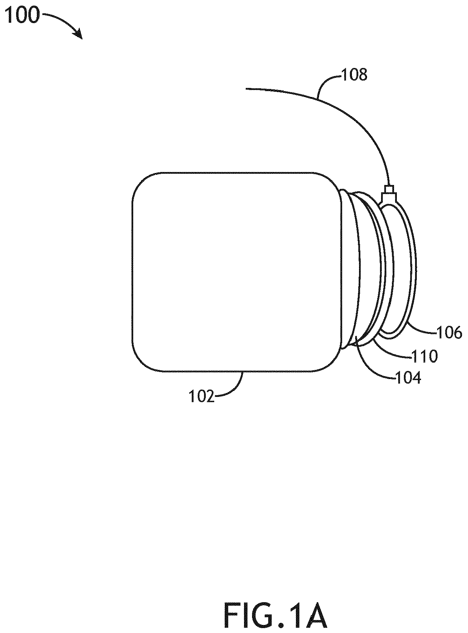

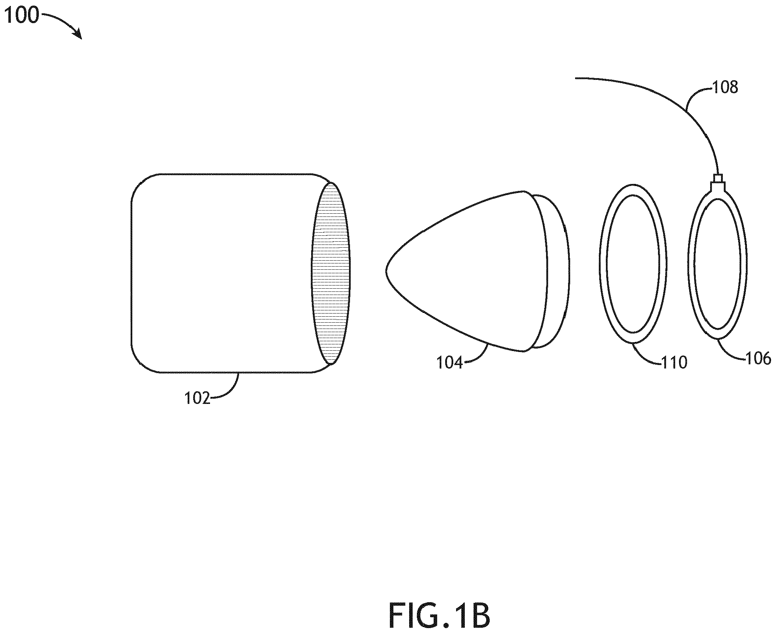

FIGS. 1A and 1B illustrate an aircraft light assembly 100, in accordance with one or more embodiments of the present disclosure. In embodiments, the aircraft light assembly 100 includes a housing 102. The housing 102 secures the components of the aircraft light assembly into a single unit and allows the aircraft light assembly to be attached to a support structure of the aircraft (e.g., landing gear, strut), or be inserted and secured to a recess within the aircraft wing or body (e.g., fuselage). The housing 102 may be constructed from several components or formed from a single molded component. The housing 102 may be constructed from any material known in the art (e.g., metal, plastic, carbon fiber, or the like).

The aircraft light assembly 100 further includes a light source 104. The light source 104 may be a landing light, a taxiing light, an external light intended to act as both a landing light or taxiing light, beacons, navigational lights, strobe lights, or any other external aircraft light source known in the art. The light source 104 may be of any type of light source 104 known in the art for use in external illumination of an aircraft including, but not limited to, incandescent light bulbs, halogen light bulbs, light emitting diodes (LEDs), and fluorescent lights. FIG. 1A illustrates the light source 104 as disposed within the cavity of the housing 102. However, the light source 104 may be attached to the aircraft without a housing 102. Therefore, the illustration of the aircraft light assembly 100 in FIG. 1A is not intended to be limiting.

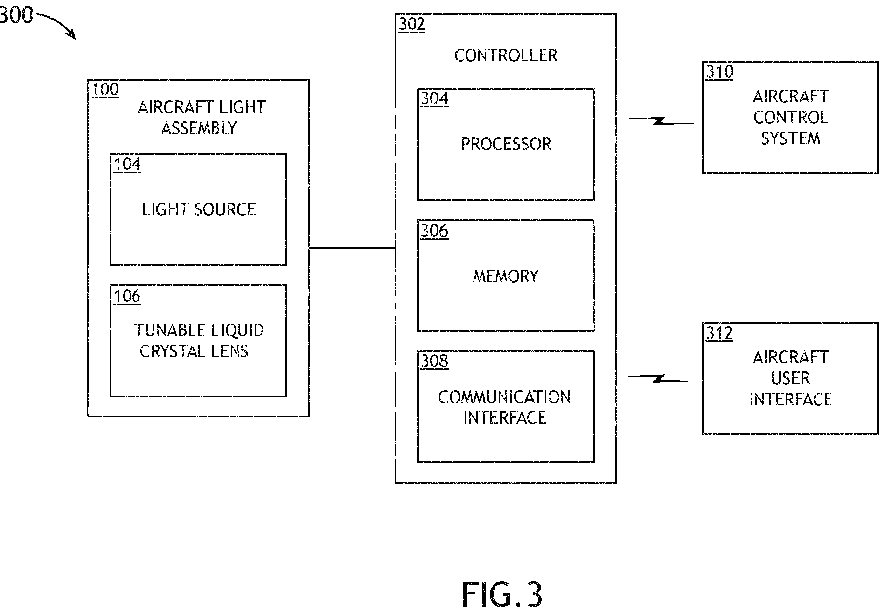

The aircraft light assembly 100 also includes a tunable liquid crystal lens 106. The tunable liquid crystal lens 106 has a dynamic refractive index, dispersion angle, and/or diffusion rate that is adjusted (e.g., increased or decreased) in response to the waveform or amplitude of an electrical signal applied to the tunable liquid crystal lens 106. For example, when an electric field is applied to the lens 106, liquid crystal molecules in the lens 106 may change orientation and cause light passing through the lens 106 to be refocused. The tunable liquid crystal lens 106 is disposed adjacent to the light source 104, allowing light from the light source 104 to be transmitted through the tunable liquid crystal lens 106. As shown in FIGS. 1A and 1B, the tunable liquid crystal lens 106 may be circular in nature. However, the shape of the tunable liquid crystal lens 106 may be of any shape of lens known in the art (e.g., circular, elliptical, squircle (e.g., rounded square/rectangle), rectangular, polygonal, etc.). In some embodiments, the tunable liquid crystal lens 106 may be of a shape of the surface of the light source 104 on which the tunable liquid crystal lens 106 is disposed. The liquid crystal lens 106 may be configured to receive an electrical signal (e.g., from controller 302 of FIG. 3) via one or more cables 108 or other electrical connectors (e.g., pins, traces, etc.).

In some embodiments, the aircraft light assembly may further include at least one collar 110. The collar 110 may hold the components of the aircraft light assembly together (e.g., as a clamp) or may be configured to seal the components of the aircraft light assembly together (e.g., as a gasket). The collar 110 may be constructed of any material known in the art for clamping and/or sealing components together, such as metal, rubber, silicone, plastic, or the like.

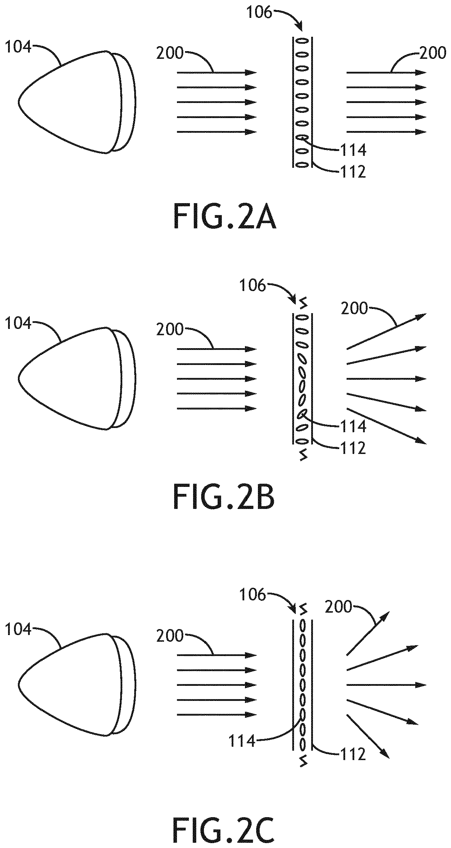

FIGS. 2A through 2C Illustrate embodiments of the tunable liquid crystal lens 106 in the absence or presence of an electrical signal. In embodiment, the tunable liquid crystal lens 106 includes liquid crystals 114 disposed within an electronically controlled, tunable liquid crystal layer 112 that is responsive to the electrical signal. In an embodiment illustrated in FIG. 2A, light 200 emanating from the light source 104 passes through the tunable liquid crystal lens 106 in the absence of an electrical signal applied to the tunable liquid crystal lens 106. In the absence of an electrical signal, the liquid crystals 114 within the tunable liquid crystal layer 112 align in a default orientation that allows light 200 to travel through the tunable liquid crystal lens 106 with a low refractive index, dispersion angle, and/or diffusion rate at the tunable liquid crystal layer 112, so that the light 200 is not diffused or only slightly diffused as it passes through the tunable liquid crystal layer 112. Alternatively, in FIG. 2A, the tunable liquid crystal lens 106 may be in the presence of an electrical signal that causes the liquid crystals 114 to align to an orientation that allows light 200 to travel through the tunable liquid crystal lens 106 with a low refractive index, dispersion angle, and/or diffusion rate at the tunable liquid crystal layer 112, so that the light 200 is not diffused or only slightly diffused as it passes through the tunable liquid crystal layer 112.

FIG. 2B illustrates light emanating from the light source 104 passing through the tunable liquid crystal lens 106 in the presence of an electrical signal with a selected amplitude or waveform (e.g., a relatively low power electrical signal) applied to the tunable liquid crystal lens 106. In the presence of the electrical signal in FIG. 2B, at least a portion of the liquid crystals 114 within the tunable liquid crystal layer 112 align to an orientation that increases the refractive index, dispersion angle, and/or diffusion rate of the tunable liquid crystal layer 112. This increase in the refractive index, dispersion angle, and/or diffusion rate causes the light 200 from the light source 104 to disperse/diffuse at a higher rate as it passes through the tunable liquid crystal layer 112, resulting in a wider light beam than the light beam occurring in FIG. 2A, for instance.

In some embodiments, when the power of the electrical signal applied to the tunable liquid crystal lens 106 is increased, the refractive index, dispersion angle, and/or diffusion rate of the tunable liquid crystal layer 112 also increases. For example, FIG. 2C illustrates light emanating from the light source 104 passing through the tunable liquid crystal lens 106 in the presence of an electrical signal with a selected amplitude or waveform (e.g., a higher power electrical signal than in FIG. 2B) applied to the tunable liquid crystal lens 106. In the presence of the electrical signal in FIG. 2C, at least a portion of the liquid crystals 114 within the tunable liquid crystal layer 112 align to an orientation that further increases the refractive index, dispersion angle, and/or diffusion rate of the tunable liquid crystal layer 112. This increase in the refractive index, dispersion angle, and/or diffusion rate causes the light 200 from the light source 104 to further disperse/diffuse at an increased rate as it passes through the tunable liquid crystal layer 112, resulting in a wider light beam than the light beam occurring in FIG. 2B, for instance.

The ability of tunable liquid crystal lens 106 to adjust the refractive index, dispersion angle, and/or diffusion rate is not limited to uniform adjustments. As more complex electrical signals (e.g., programmed waveforms) are applied to the tunable liquid crystal lens 106, local changes in the refractive index, dispersion angle, and/or diffusion rate within the tunable liquid crystal lens 106 may appear. These local changes in the refractive index, dispersion angle, and/or diffusion rate can shape light 200 transmitting through the tunable liquid crystal lens 106 nonuniformly, allowing the tunable liquid crystal lens 106 to disperse, shape, and/or steer the light 200 passing through the tunable crystal lens 106.

FIG. 3 is a block diagram illustrating an external lighting system 300 wherein an aircraft light assembly 100 is communicatively and/or electrically coupled to a controller 302 (e.g., via one or more cables 108, or the like). In embodiments, the external lighting system 300 may include a plurality of aircraft light assemblies 100. The external lighting system 300 may also contain a plurality of controllers 302 (e.g., one for each aircraft light assembly 100). Alternatively, a controller 302 may control more than one aircraft light assembly 100.

In embodiments, the aircraft light assembly 100 of the external lighting system 300 is electrically coupled to a controller 302, the controller 302 can be configured to transmit/apply the electrical signal to the tunable liquid crystal lens 106 of the aircraft lens assembly 100 (e.g., via cable 108). In embodiments, the controller 302 is commutatively and/or electrically coupled to the tunable liquid crystal lens 106. As discussed above, in the presence of the electrical signal, the refractive index, dispersion angle, and/or diffusion rate of the tunable liquid crystal lens 106 is increased or decreased. This results in a dispersing/diffusing, shaping, and/or steering of the light 200 emanating from the light source 104 and passing through the tunable liquid crystal lens 106.

In some embodiments, the controller 302 is an adjustable resistor (e.g., rheostat, potentiometer, trimmer, or the like). In this regard, the electrical signal to the tunable liquid crystal lens 106 may be altered by reconfiguring the adjustable resistor manually. In another embodiment, the adjustable resistor is reconfigured automatically based on input received from an aircraft control system 310 or aircraft user interface 312.

In other embodiments, the controller 302 includes a processor 304 configured to execute program instructions from memory 306. The controller 302 may be configured to provide processing functionality to the external lighting system 300 and can include any number of processors 304 (e.g., microprocessors, micro-controllers, circuitry, field programmable gate arrays (FPGA) or other processing systems) and resident or external memory 306 for storing data, executable code, and other information accessed or generated by the external lighting system 300. The controller 302 can execute one or more software programs embodied in a non-transitory computer readable medium (e.g., memory 306) that implement techniques described herein. The controller 302 is not limited by the materials from which it is formed or the processing mechanisms employed therein and, as such, can be implemented via semiconductor(s) and/or transistors (e.g., using electronic integrated circuit (IC) components), and so forth.

In embodiments, the controller 302 further includes or is coupled to a communication interface 308. The communication interface 308 can be operatively configured to communicate with components of the external lighting system 300. For example, the communication interface 308 can be configured to retrieve data from the controller 302 or other devices (e.g., aircraft control system 310, aircraft user interface 312), transmit data for storage in memory 306, retrieve data from storage in the memory 306, and so forth. The communication interface 308 can also be communicatively coupled with the controller 302 to facilitate data transfer between components of the aircraft light assembly 100 and the controller 302 (e.g., feedback signals). It should be noted that while the communication interface 308 is described as a component of the external lighting system 300, one or more components of the communication interface 308 can be implemented as external components communicatively coupled to the external lighting system 300 via a wired and/or wireless connection. The external lighting system 300 can also include and/or connect to one or more input/output (I/O) devices.

In embodiments, the communication interface 308 includes or is coupled to a transmitter, receiver, transceiver, physical connection interface, or any combination thereof. In some embodiments, the communication interface 308 of an external lighting system 300 may be configured to communicatively couple to additional communication interfaces of additional external lighting systems 300 using any wireless communication techniques known in the art including, but not limited to, GSM, GPRS, CDMA, EV-DO, EDGE, WiMAX, 3G, 4G, 4G LTE, 5G, WiFi protocols, RF, LoRa, and the like.

The controller 302 may be configured to adjust one or more parameters (e.g., signal power, frequency, phase, waveform, etc.) of the electrical signal applied to the tunable liquid crystal layer 112 of the dynamic beam shaping lens 106 in response to one or more inputs from the aircraft control system 310 or the aircraft user interface 312, either automatically or in response to feedback from the aircraft control system 310 or aircraft user interface 312. For example, upon receipt of an application selection for a specific light shape or width, the controller 302 may be configured to generate a specific electrical signal and apply the signal to the tunable liquid crystal lens 106. By way of another example, the controller 302 may be configured to adjust the output of the electrical signal in response to prompts from the aircraft control system 310 or aircraft user interface 312. By way of another example, the controller 302 may be configured to adjust the output electrical signal automatically based on at least one parameter including, but not limited to, velocity, acceleration, altitude, angle of attack, and/or turning direction detected or determined by the aircraft control system 310. In some embodiments, the controller 302 may be configured to adjust the output electrical signal based on a program stored within a memory 306.

In embodiments, the controller 302 is communicatively coupled to an aircraft control system 310. The aircraft control system 310 (e.g., a flight management system (FMS)) may be configured to detect or determine that a flight parameter or flight mode requires that an adjustment be made to the aircraft light 200. Subsequently, the aircraft control system 310 may be configured to communicate instructions to the controller 302. Upon receiving the instructions, the controller 302 is configured to transmit an electrical signal with a selected amplitude or waveform to the tunable liquid crystal lens 106 within the aircraft light assembly 100, resulting in the appropriate change in the refractive index, dispersion angle, and/or diffusion rate of the tunable liquid crystal lens 106 (e.g., an adjustment in the dispersion/diffusion of light through the tunable liquid crystal lens). Flight parameters that affect the input from the aircraft control system 310 to the controller include, but are not limited to, velocity, acceleration, altitude, angle of attack, turning direction, or any other flight parameter that may require an adjustment to the aircraft light 200. For instance, the aircraft control system 310 may provide input to the controller 302 to change the dispersion angle of the light 200 emitted by the aircraft light assembly 100 from (e.g., from a wider angle to a narrower angle) as the aircraft reaches a specific speed or acceleration on a runway during take-off.

In embodiments, an adjustment may be made to the aircraft light 200 based on the flight mode of the aircraft. In some embodiments, different flight modes may be distinguished by the values of a specific set of parameters. For example, a flight mode may exist where the aircraft is operating at a low altitude (e.g., less than 10,000 feet). Similarly, different flight modes may exist when the aircraft is operating at mid altitude (e.g., between 10,000 and 30,000 feet) and high altitude (e.g., above 30,000 feet).

Flight modes may also be distinguished by the airspeed or acceleration of the aircraft. For example, a flight mode may exist where the aircraft is operating at take-off or landing speeds (e.g., less than 200 knots). Similarly, different flight modes for the aircraft may exist at different airspeeds while the aircraft is in flight. Flight modes may also be defined by the speed of the aircraft as it is taxiing on the ground. For example, a flight mode may exist where the aircraft is taxiing at a slow speed (e.g., less than 20 km/hr). When taxiing at this velocity, a specific flight mode may be identified by the aircraft control system 310. In response, the aircraft control system 310 may be configured to instruct the controller 302 to widen the dispersion angle of the light 200 emanating from the aircraft light assembly 100 (e.g., by applying an electrical signal that increases the refractive index, dispersion angle, and/or diffusion rate of the tunable liquid crystal lens 106).

Flight modes may also be defined by the angle of attack by the aircraft. For example, a flight mode may be defined by the angle of attack when the aircraft is in a declining position, approaching the runway for a landing. Alternatively, a flight mode may be defined by the angle of attack that occurs when the aircraft is in an inclining position, immediately after take-off.

Flight modes may also be defined by the turning direction of the aircraft. For example, the aircraft control system 310 may be configured to identify that an aircraft taxiing at the airport is making a left turn. The aircraft control system 310 may be configured to instruct the controller 302 to adjust one or more parameters (e.g., signal power, frequency, phase, waveform, etc.) of the electrical signal applied to the dynamic beam shaping lens 106 to steer the light 200 emanating from the aircraft light assembly 100 to the left. Similarly, a flight mode based on a turning direction may be made while the aircraft is in the air, approaching a runway. In this example, the aircraft control system 310 may be configured to instruct the controller 302 to adjust one or more parameters (e.g., signal power, frequency, phase, waveform, etc.) of the electrical signal applied to the dynamic beam shaping lens 106 to steer the light from the aircraft light assembly 100 (downward) toward the runway regardless of the position of the aircraft, which would allow the light to be constantly focused on the runway, even if the aircraft is buffeted by turbulence.

Flight modes may be identified when a threshold has been reached by at least one or more parameters. For example, parameters for velocity, acceleration, altitude, angle of attack, and turning direction may all be defined in a flight mode. Once the thresholds for the parameters in the flight mode have been met, the controller 302 is configured to adjust the light 200 of the aircraft. Flight modes may also include any other parameters of the status of the aircraft given to the controller 302 to control the dispersion/diffusion characteristics of light 200 emitted by the aircraft light assembly 100 (or multiple aircraft light assemblies 100).

In some embodiments, the external lighting system 300 includes an aircraft user interface 312. The aircraft user interface 312 may be communicatively coupled to the controller 302 (e.g., via the communication interface 308). In some embodiments, the aircraft user interface 312 may be configured to, instruct the controller 302 to adjust one or more parameters (e.g., signal power, frequency, phase, waveform, etc.) of the electrical signal applied to the dynamic beam shaping lens 106. This adjustment by the controller 302 may be dependent upon a change of at least one flight parameter. Flight parameters that affect the input from the aircraft user interface 312 to the controller include, but are not limited to, at least one of velocity, altitude, angle of attack, turning direction, or any other flight parameter that may requires that an adjustment be made to the aircraft light 200.

In some embodiments, the aircraft user interface 312 may adjust the input to the controller 302 based on the flight mode of the aircraft. For example, as the aircraft is transitioning from taxiing mode to takeoff mode, aircraft user interface 312 may be used to communicate (e.g., input) the flight mode to the controller 302, whereby the controller 302 is configured to adjust one or more parameters (e.g., signal power, frequency, phase, waveform, etc.) of the electrical signal applied to the dynamic beam shaping lens 106 based on the flight mode to change the dispersion angle of the light 200 emitted by the aircraft light assembly 100 (e.g., from a wider angle to a narrower angle). In other embodiments, the aircraft user interface 312 can be used to communicate (e.g., input) instructions for the controller 302 to adjust one or more parameters (e.g., signal power, frequency, phase, waveform, etc.) of the electrical signal applied to the dynamic beam shaping lens 106 to change the dispersion angle of the light 200 emitted by the aircraft light assembly 100 (e.g., from a wider angle to a narrower angle). Correspondingly, upon landing, the aircraft user interface 312, may be used to communicate (e.g., input) the flight mode to the controller 302, whereby the controller 302 is configured to adjust one or more parameters (e.g., signal power, frequency, phase, waveform, etc.) of the electrical signal applied to the dynamic beam shaping lens 106 based on the flight mode to change the dispersion angle of the light 200 emitted by the aircraft light assembly 100 (e.g., from a narrower angle to a wider angle). In other embodiments, the aircraft user interface 312 can be used to communicate (e.g., input) instructions for the controller 302 to adjust one or more parameters (e.g., signal power, frequency, phase, waveform, etc.) of the electrical signal applied to the dynamic beam shaping lens 106 to change the dispersion angle of the light 200 emitted by the aircraft light assembly 100 (e.g., from a narrower angle to a wider angle). Alternatively, the light 200 may be adjusted by a combination of inputs from both the aircraft user interface 312 and the aircraft control system 310.

The rules regarding external aircraft light usage vary between countries, jurisdictions, companies, aircraft types, and other modifying characteristics. Therefore, there are many different mode selections that may exist for which the aircraft control system 310 or aircraft user interface 312 will provide instructions to the controller 302 to alter the tunable liquid crystal lens 106 of the aircraft light assembly 100.

In embodiments, the input from the aircraft user interface 312 may override the input from the aircraft control system 310. For example, the aircraft control system 310, may provide instructions to the controller 302 to change the dispersion angle of the light 200 from wide to narrow as the aircraft begins a takeoff flight mode. If the takeoff is aborted, an input provided via the aircraft user interface 312 may cause the controller to override an input from the aircraft control system 310, returning the dispersion angle of the light 200 from narrow to wide. In this regard, the controller 302 may be configured to operate in an override mode initiated by the aircraft user interface 312.

In some embodiments, the aircraft control system 310, upon determining the parameters and/or flight mode of the aircraft, instructs the controller to adjust the one or more parameters (e.g., signal power, frequency, phase, waveform, etc.) of the electrical signal applied to the dynamic beam shaping lens 106 to change the dispersion angle of the light 200 emitted by the aircraft light assembly 100 (e.g., from a narrower angle to a wider angle). In some embodiments, the aircraft control system 310, transmits the parameters and/or flight mode of the aircraft to the controller 302. The controller 302 then determines light dispersion characteristics for the aircraft light assembly 100, and adjusts the one or more parameters (e.g., signal power, frequency, phase, waveform, etc.) of the electrical signal applied to the dynamic beam shaping lens 106 to change the dispersion angle of the light 200 emitted by the aircraft light assembly 100 (e.g., from a narrower angle to a wider angle). In some embodiments, the controller 302 is capable of identifying at least one of a flight parameter or flight mode and determining the light dispersion characteristics for the aircraft light assembly 100 based on the flight parameter(s) and/or flight mode. In some embodiments, the controller 302 is capable of determining at least one of a flight parameter or flight mode and is capable of receiving instructions from the aircraft control system 310. The controller 302 then uses input from both the controller 302 and the aircraft control system 310 to determine the light dispersion characteristics for the aircraft light assembly 100.

The aircraft user interface 312 may include any user input device known in the art. For example, the one or more user input devices may include, but are not limited to, a keyboard, a keypad, a touchscreen, a lever, a knob, a scroll wheel, a track ball, a switch, a dial, a sliding bar, a scroll bar, a slide, a touch pad, a paddle, a steering wheel, a joystick, a button, a bezel input device or the like. In the case of a touchscreen interface, those skilled in the art should recognize that a large number of touchscreen interfaces may be suitable for implementation in the present disclosure. For instance, a display device may be integrated with a touchscreen interface, such as, but not limited to, a capacitive touchscreen, a resistive touchscreen, a surface acoustic based touchscreen, an infrared based touchscreen, or the like. In a general sense, any touchscreen interface capable of integration with the display portion of a display device is suitable for implementation in the present disclosure. Likewise, the aircraft user interface 312 may include any type of display device suitable for implementation in the present disclosure (e.g., touchscreen, digital readouts, analog readouts).

It is to be understood that the external light assembly 100, the controller 302, the aircraft user interface 312 and the aircraft control system 310 are depicted as separate blocks in FIG. 3 merely for illustrative purposes. It is contemplated that the external light assembly 100, the controller 302, the aircraft user interface 312 and the aircraft control system 310 may be implemented jointly or separately without departing from the spirit and scope of the present disclosure. It is also contemplated that the controller 302 may be coupled to the external light assembly 100, the aircraft user interface and 312 the aircraft control system 310 in any suitable manner (e.g., via one or more transmission media, which may include "wired" and/or "wireless" transmission media) without departing from the spirit and scope of the present disclosure.

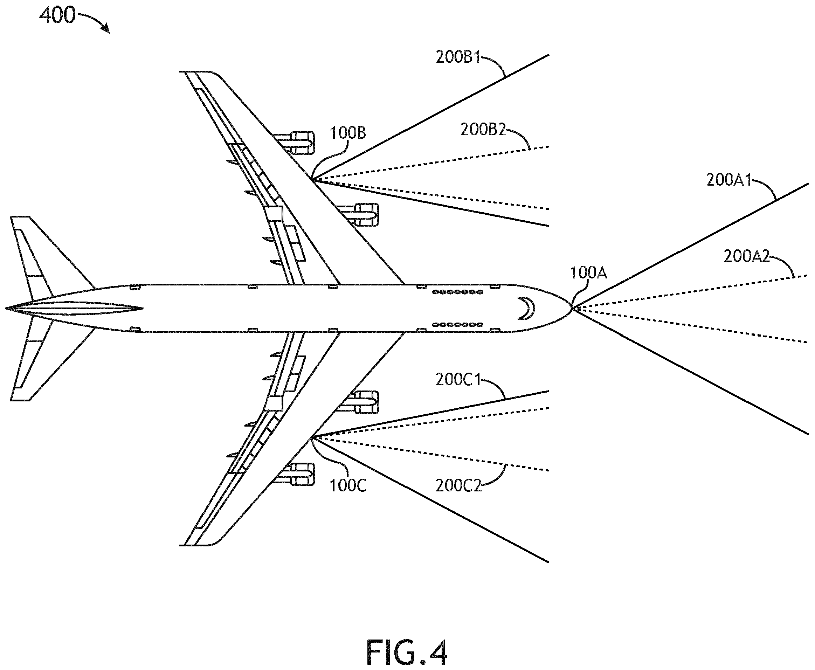

FIG. 4 illustrates an embodiment of the aircraft light assembly 100 incorporated within an aircraft 400 (e.g., airplane, jet, etc.). For example, an aircraft light assembly 100 (e.g., aircraft light assembly 100A) may be attached to the nose, forward landing gear, cockpit, or forward section of the fuselage of the aircraft 400. One or more aircraft light assemblies 100 (e.g., aircraft light assemblies 100B, 100C) may also be attached to the wings of the aircraft 400. The point of attachment for the aircraft light assemblies 100 on the wings of the aircraft 400 may be within a recess in the body of the wing of the aircraft. Alternatively, the point of attachment may be on a wing strut or other structural form.

In embodiments, the aircraft light assemblies 100 attached to the aircraft 400 are capable of adjusting the spread of the light 200 transmitted from the light source 104. For example, in the presence of a relatively low power signal to the aircraft light assembly 100A located on the nose of the aircraft, light 200A2 with a narrow/small dispersion angle may be transmitted from the aircraft light assembly 100A. Light 200A2 with a narrow/small dispersion angle may be appropriate when the aircraft 400 is in a take-off or landing flight mode. When the aircraft 400 is in a taxiing or loading/unloading mode, light 200A1 with a wider/greater dispersion angle may be required. In this case, a higher power signal may be applied to the tunable liquid crystal lens 106 of the nose aircraft light assembly 100A to increase the refractive index, dispersion angle, and/or diffusion rate of the tunable liquid crystal lens 106, resulting in light 200A1 with a wider/greater dispersion angle. Additionally, the light 200 may be steered downward in order to more effectively illuminate the runway. In embodiments, steering of the light 200 may be accomplished by adjusting a waveform and/or one or more parameters of the waveform of the electrical signal applied to the tunable liquid crystal lens 106 by the controller 302.

In embodiments, aircraft light assemblies 100B, 100C attached to the wings of the aircraft 400 are capable of adjusting the spread of the light 200 transmitted from the light source 104. For example, in the presence of a relatively low power signal to the aircraft light assemblies 100B, 100C, light 200B2, 200C2 with a narrow/small dispersion angle may be transmitted from the aircraft light source assemblies 100B, 100C. Light with a narrow/small dispersion angle may be appropriate when the aircraft 400 is in a take-off or landing flight mode. When the aircraft 400 is in a taxiing or loading/unloading mode, light 200B1, 200C1 with a wider/greater dispersion angle may be required. In this case, a higher high-power signal may be applied to the tunable liquid crystal lens 106 of the aircraft light assemblies 100B, 100C to increase the refractive index, dispersion angle, and/or diffusion rate of the tunable liquid crystal lens 106, resulting in light 200B1, 200C1 with a wider/greater dispersion angle.

Light 200B1/200C1 is also capable of being dispersed, shaped, and steered through an adjustment of the electrical signal (e.g., waveform) applied to the respective tunable liquid crystal lens 106 of each aircraft light assembly 100B, 100C. In embodiments, the light 200B1/200C1 may be steered by the controller 302 adjusting a waveform and/or one or more parameters of the waveform of the electrical signal applied to the tunable liquid crystal lens 106 so that the beams are directed towards the periphery of the aircraft, rather than straight ahead.

A failure of the tunable liquid crystal lens 106 (e.g., by a loss of electrical signal to the tunable liquid crystal lens or mechanical destruction (or loss) of the tunable liquid crystal lens) in an aircraft 400 will prevent the tunable liquid crystal lens from adjusting the refractive index, dispersion angle, and/or diffusion rate of the liquid crystal layer in response to the waveform or amplitude of an electrical signal applied to the tunable liquid crystal lens 106. The inability of the tunable liquid crystal lens 106 to adjust the refractive index, dispersion angle, and/or diffusion rate of the liquid crystal layer 112 will result in the transmission of light 200 through the tunable liquid crystal lens 106 with no diffusion or very little diffusion by the tunable liquid crystal lens 106 so that visibility from the aircraft 400 is not adversely affected during take-off or landing. The tunable liquid crystal lens 106 can therefore provide a safe, non-mechanical method for modifying the characteristics of external aircraft light 200.

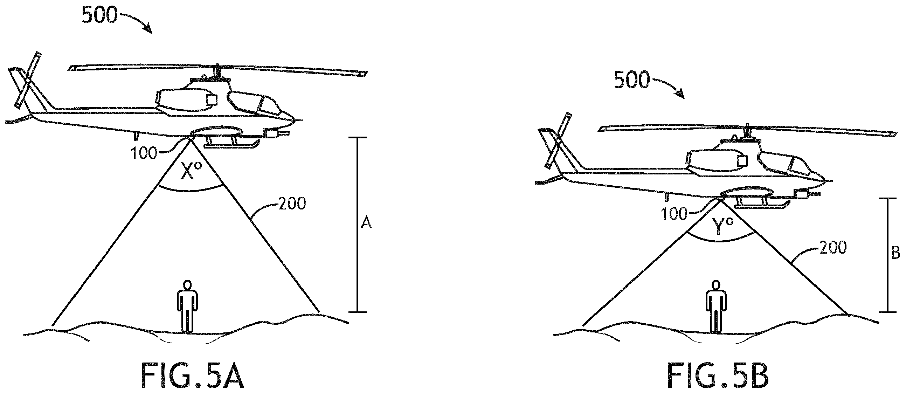

FIG. 5 Illustrates an embodiment of the aircraft light assembly 100 incorporated within a helicopter 500. In embodiments, the aircraft light assembly 100 may be attached to the underside of the fuselage of the helicopter 500. In some embodiments, the aircraft light assembly 100 may be attached to the nose (e.g., front section) or tail boom of the helicopter 500. In some embodiments, the aircraft light assembly 100 may be attached to any part of the helicopter 500 known in the art to attach aircraft light assemblies 100. FIG. 5A illustrates an aircraft light assembly 100 attached to the helicopter 500 and operating as the helicopter 500 is relatively high off of the ground (e.g., at height A). At high altitudes, the dispersion angle, X, of the light 200 used to illuminate the field below the helicopter 500 may be relatively narrow/small. In this case, a low power electrical signal may be applied to the tunable liquid crystal lens 106 of the aircraft light assembly 100, resulting in a light 200 with a narrow/small dispersion angle that can effectively illuminate the ground below the helicopter 500.

FIG 5B illustrates an aircraft light assembly 100 attached to the helicopter 500 and operating as the helicopter 500 is relatively near the ground (e.g., at height B). At low altitudes, the dispersion angle, Y, of the light 200 used to illuminate the field below the helicopter may be wide/large. In this case, a relatively high-power electrical signal may be applied to the tunable liquid crystal lens 106 of the aircraft light assembly 100, resulting in light 200 with a wide/large dispersion angle that can effectively illuminate the ground below the helicopter 500.

In embodiments, the adjustment of the light 200 in the aircraft light assembly 100 in a helicopter 500 between narrow and wide dispersion angles may be made by the aircraft user interface 312 communicating with the controller 302 configured to adjust the electrical signal to the tunable liquid crystal lens 106. In some embodiments, the light adjustment may be made by the aircraft control system 310 communicating with a controller 302 configured to adjust the electrical signal to the tunable liquid crystal lens 106. In some embodiments, the light 200 may be adjusted by a combination of inputs from both the aircraft user interface 312 and the aircraft control system 310.

Although inventive concepts have been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. An aircraft light assembly (100), comprising:
a tunable liquid crystal lens (106) including an electrically controlled tunable liquid crystal layer;
a light source (104) configured to direct light through the tunable liquid crystal lens; and
a controller (302) coupled to the tunable liquid crystal lens, the controller configured to generate an electrical signal that produces a uniform or non-uniform adjustment of the tunable liquid crystal lens, the adjustment of the tunable liquid crystal lens resulting in at least one of a dispersing, shaping, or steering of the light as the light passes through the tunable liquid crystal layer of the tunable liquid crystal lens, wherein the controller is configured to generate the electrical signal based upon an input from at least one of an aircraft control system or an aircraft user interface.

2. The aircraft light assembly of claim 1, wherein the input to the controller is based on at least one flight parameter detected or determined by the aircraft control system.

3. The aircraft light assembly of claim 2, wherein the at least one flight parameter comprises at least one of a velocity, an altitude, an angle of attack, or a turning direction detected or determined by the aircraft control system.

4. The aircraft light assembly of claim 2, wherein the controller is configured to generate the electrical signal to produce an adjustment of the tunable liquid crystal layer of the tunable liquid crystal lens to increase dispersion of the light as the light passes through the tunable liquid crystal layer when the at least one flight parameter detected or determined by the aircraft control system is less than at least one of a predetermined threshold value for the at least one flight parameter.

5. The aircraft light assembly of claim 2, wherein the controller is configured to generate the electrical signal to produce an adjustment of the tunable liquid crystal layer of the tunable liquid crystal lens to reduce dispersion of the light as the light passes through the tunable liquid crystal layer when the at least one flight parameter detected or determined by the aircraft control system is greater than at least one of a predetermined threshold value for the at least one flight parameter.

6. The aircraft light assembly of claim 2, wherein the controller is configured to generate the electrical signal to produce an adjustment of the tunable liquid crystal layer of the tunable liquid crystal lens to steer the light as the light passes through the tunable liquid crystal layer based on the at least one flight parameter detected or determined by the aircraft control system.

7. The aircraft light assembly of claim 1, wherein the input to the controller is based on a flight mode provided by the aircraft control system or via the aircraft user interface.

8. The aircraft light assembly of claim 7, wherein the controller is configured to generate the electrical signal to produce an adjustment of the tunable liquid crystal layer of the tunable liquid crystal lens to increase dispersion of the light as the light passes through the tunable liquid crystal layer when the flight mode provided by the aircraft control system or the aircraft user interface corresponds to a low altitude and low velocity mode of operation.

9. The aircraft light assembly of claim 7, wherein the controller is configured to generate the electrical signal to produce an adjustment of the tunable liquid crystal layer of the tunable liquid crystal lens to reduce dispersion of the light as the light passes through the tunable liquid crystal layer when the flight mode provided by the aircraft control system or the aircraft user interface corresponds to at least one of a high altitude or a high velocity mode of operation.

10. The aircraft light assembly of claim 7, wherein the controller is configured to generate the electrical signal to produce an adjustment of the tunable liquid crystal layer of the tunable liquid crystal lens to steer the light as the light passes through the tunable liquid crystal layer based on the flight mode provided by the aircraft control system or the aircraft user interface.

11. An external lighting system for an aircraft, comprising:
an aircraft control system;
an aircraft user interface; and
one or more aircraft light assemblies mounted to the aircraft, the aircraft light assembly of any preceding claim.
